# EUROPEAN PATENT SPECIFICATION

(11) **EP 3 828 014 B1**
(45) Date of publication and mention of the grant of the patent: **28.06.2023**
(21) Application number: 20209684.8
(22) Date of filing: 25.11.2020
(51) Int. Cl.: B60C 25/05, B60C 25/138

(54) **DEVICE FOR MOUNTING AND REMOVING A TIRE ON AND FROM A RIM**
VORRICHTUNG ZUR MONTAGE UND DEMONTAGE EINES REIFENS AUF UND VON EINER FELGE
PROCÉDÉ D'ASSEMBLAGE ET DE DÉMONTAGE D'UN PNEU VERS OU EN PROVENANCE D'UNE JANTE

(30) Priority: 27.11.2019 IT 201900022317
(43) Date of publication of application: 02.06.2021
(73) Proprietor: CEMB S.p.A., 23826 Mandello del Lario (LC) (IT)
(72) Inventor: FERRARI, GIOVANNI, 42035 CASTELNUOVO NÉ MONTI (REGGIO EMILIA) (IT)
(74) Representative: Zoli, Filippo

(56) References cited:
- IT-A1- MI20 102 172
- US-A- 1 439 381
- US-A- 2 009 338

## Description

The present invention relates to a device for mounting and removing a tire on and from a wheel rim.

The operations for removing and mounting a tire from and on a wheel rim require significant operator attention, because it is difficult to assess the effort applied to the tire in order to complete the operations; this leads to the risk of causing damage both to the sealing region of the tire with the rim, the bead, and to the rim itself.

The automatic mounting/removal systems used so far in tire removal machines are systems that have replaced the lever, used manually up to the 2000's, with hooks, claws or tools in general. Once inserted, by means of the force of a cylinder between the edge of the rim and the bead of the tire, such tools extract the bead, moving it beyond the rim edge when the movement of the cylinder used for insertion is reversed.

Accordingly, in most cases, intense forces are applied to the bead of the tire, because the hook/claw is interposed between the rim and the tire and forces its extraction (removal) or insertion (mounting) in the seat during the transition from below to above the rim edge and vice versa.

Additionally, the hook/claw may rub against the rim, producing marks and/or compressions thereon, and this occurs especially during the rotation of the table that supports the wheel, when the operation for removing or mounting the tire begins or ends, and therefore at the moments of maximum stress.

All these systems, known as "leverless", operate by extracting, in practice by forcing, i.e., by pulling, the bead on the rim edge.

Sometimes those devices are considered as no rim contact devices, but actually they still touch the rim, because of the flexing induced on the articulated system that supports the hook/tool, due to the considerable force that is required in order to perform the extraction operation owing to the rigidity of the bead to be extracted.

In practice, all known systems actually simulate the action of the traditional manual lever used in the past.

There are also leverless systems, which are not constrained and guide the bead on the rim edge without making it follow a predetermined path to move over the rim edge, thus attempting to limit the forces due to the bead.

All those systems have the characteristic of not retaining, i.e., engaging, the bead during the entire rim surmounting path.

When at maximum stress, i.e. during the passage over the rim edge, the bead often slips off the tool.

This possibility causes a waste of time, because the operation must be restarted, sometimes needing further tools in order to prevent the malfunction from repeating.

There are various examples of leverless system with which attempts have been made to solve the problem of the damaging contact of the tool with the rim edge and of the effort applied to the bead during extraction/mounting, for example US7497761, US2018/0104997, US2016/0001618, US2014/0223741, US2016/0023524, US20150144273, US2012/0291959, US2016/0129739, US2009/0266494.

US1439381A discloses a tool for helping removing a tire from the wheel.

US2009338A discloses a tire tool wherein the shoe of a pneumatic tire can be clamped for bringing together the open side of the shoe to permit the easy removal of the shoe from a rim and also the placing of the shoe upon the rim.

The aim of the present invention is to provide a device, for mounting and removing a tire on and from the rim, that overcomes the drawbacks of the cited prior art.

Within the scope of this aim, an object of the invention is to provide a device that allows the mounting and removal of the tire on/from the rim, avoiding any damage of the rim.

A further object of the invention is to provide a device that is capable of moving the bead of the tire from below to above the rim edge, and vice versa, by rotating it about itself, and, simultaneously or not, of making it advance/retract on/from the rim.

A further object of the invention is to provide a device that allows to reduce the effort, i.e., the tension, on the bead during the step for removal/mounting of the tire.

A further object of the invention is to provide a device that avoids the slippage of the bead below the rim edge, and vice versa, during removal/mounting and therefore allows to guide/retain it in the initial step of the movement, when this risk is greatest.

A further object of the invention is to provide a device that does not require the intervention of the operator during the removal/mounting of the tire except in the initial step for correct positioning with respect to the edge of the rim.

A further object of the invention is to provide a device that is economical to manufacture and does not require considerable difficulty for its use.

A further object of the invention is to provide a device that can be applied to an automatic machine.

A further object of the present invention is to provide a device which, by virtue of its particular constructive characteristics, is capable of giving the greatest assurances of reliability and safety in use.

This aim and these and other objects which will become better apparent hereinafter are achieved by a device for mounting and removing a tire on and from a rim, as claimed in the appended claims.

Further characteristics and advantages will become better apparent from the description of preferred but not exclusive embodiments of the invention, illustrated by way of non-limiting example in the accompanying drawings, wherein:

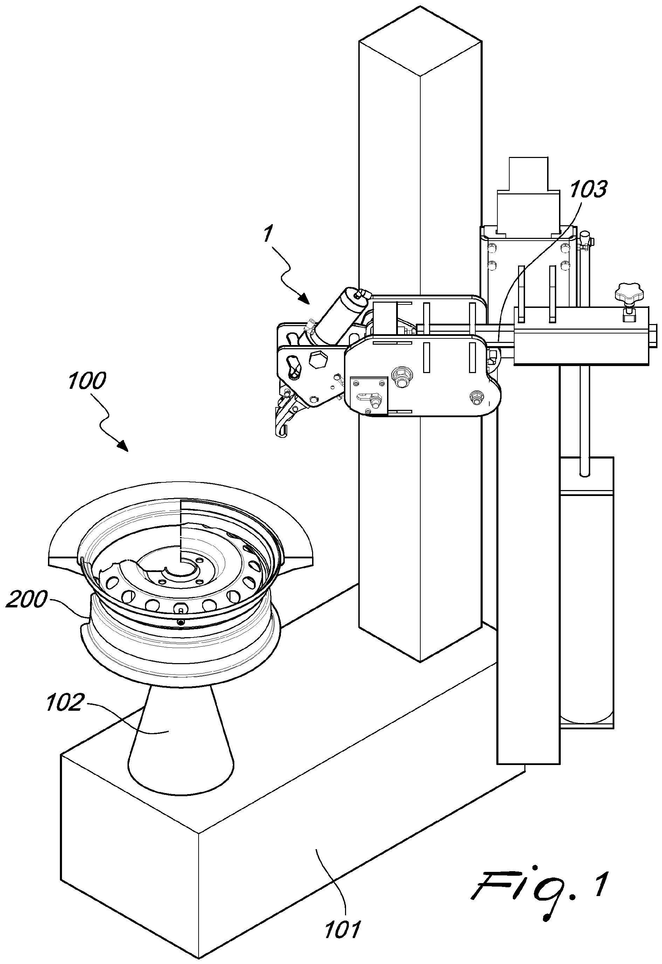

Figure 1 is a general perspective view of a tire removal machine provided with the device according to the present invention;

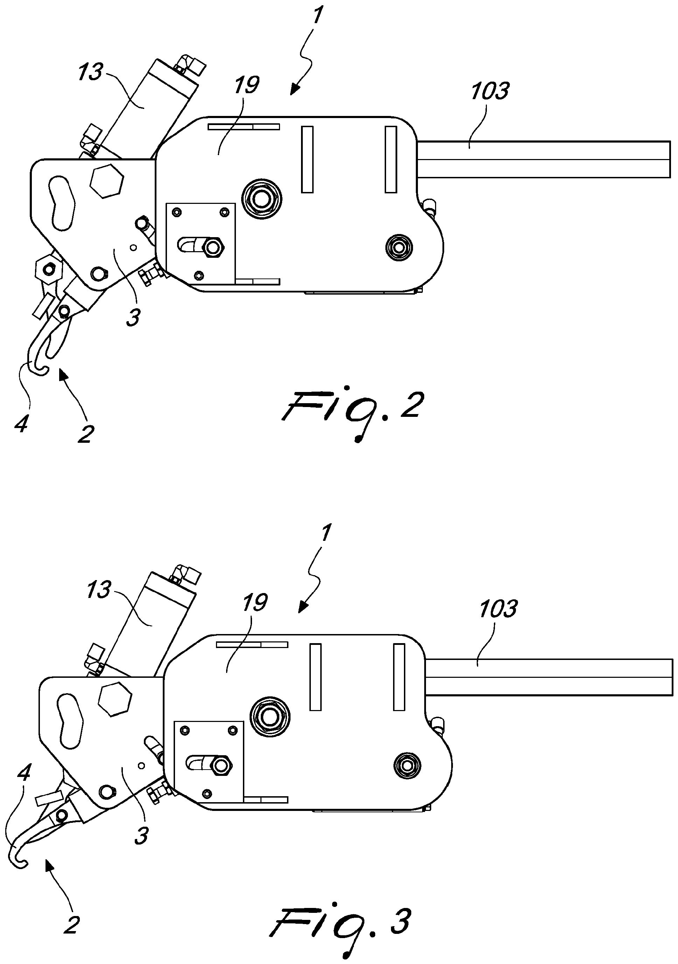

Figure 2 is a side view of the device;
Figure 3 is a side view, similar to the preceding one, showing the device with the pincers in a different position;
Figures 4-9 show in sequence the steps of the removal of the tire;
Figure 10 is a partially sectional side view which schematically illustrates the device arranged to begin the removal of a tire from the rim;
Figure 11 is a view, similar to the preceding one, showing the device in a step of operation;
Figure 12 is a schematic view of a part of the device according to a further aspect of the invention;
Figure 13 is a view of the position of the retention element of the device of the preceding figure, in the disengaged position;
Figure 14 is a view of the position of the retention element of the device of the preceding figure, in the engaged position.

With reference to the cited figures, the device according to the invention, generally designated by the reference numeral 1, is applied to a tire removing machine 100 which substantially includes a footing 101, on which a table or spindle 102 is mounted which rotates about its own axis and on which, in turn, a rim 200 or the wheel (rim + tire) to be processed is fastened by means of an appropriate locking system.

The rotation axis of the wheel or rim is normally vertical, as in the constructive example illustrated herein.

The machine 100 is provided with an arm 103, which is mounted on guides and can move in a radial direction (normally a horizontal one) with respect to the spindle 102.

The arm/support, by means of a suitable actuation (pneumatic, mechanical, hydraulic, etc.), can be moved in a direction that is parallel to the axis of the spindle 102.

The device 1 according to the present invention is mounted on the arm 103 of the machine 100.

The device 1 has a pincers element 2 which is pivoted in a tool body 3 and can grip the bead 301 of a tire 300. The pincers element 2 performs a preset rotation together with the tool body 3 with respect to a main frame 19 and moves away from the edge 201 of the rim 200 performing a movement for surmounting the edge 201 without making contact with the rim. At the end of the rotation, the pincers element 2 releases the bead 301 on the outer edge 201 of the rim, in the removal operation, or in the seat 202 of the rim, in the mounting operation.

The pincers element 2 has at least two articulated levers, of which a first lever 4 has the function of a tool.

The pincers element 2 opens and, by means of the joint action of an actuation mechanism and of the flank 302 of the tire 300, makes the first lever 4 grip the bead 301 to begin the removal/mounting operation.

Subsequently, the actuation mechanism retracts the pincers element 2 from the rim 200 and makes it rotate with respect to its fulcrum, moving the bead 301 from below to above the edge 201 of the rim, in the operation for removing the tire from the rim, until the position is reached in which, upon release of the actuation, the bead 301 is rested by the pincers element 2 on the edge of the rim in order to complete the operation; vice versa, in the mounting operation.

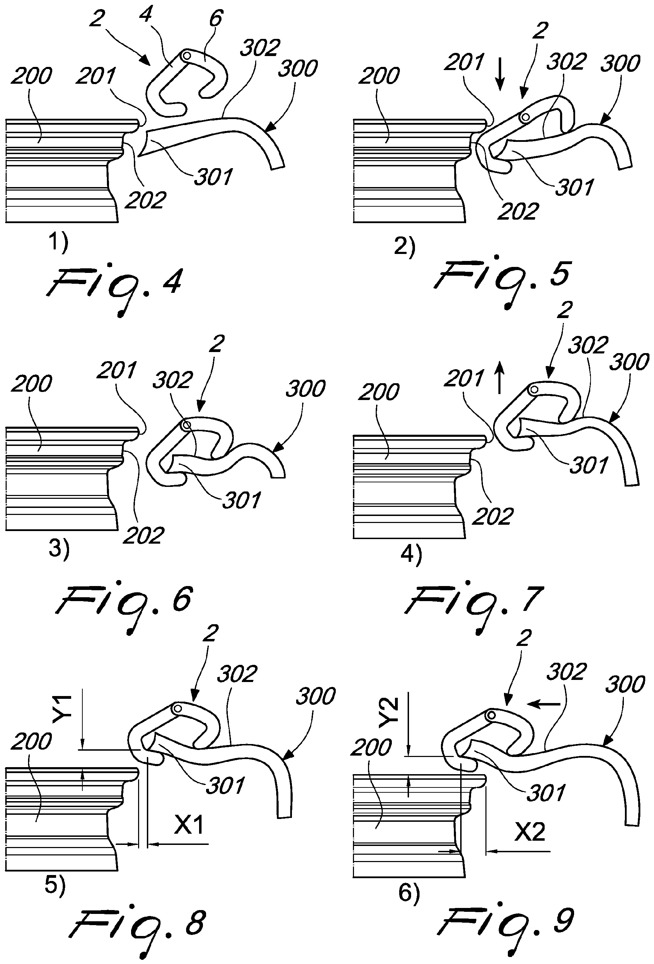

Figures 4-9 show in sequence the steps of removal of the tire 300 from the rim 200 by means of the device according to the present invention, which is shown schematically as being constituted by two basic elements, the first lever 4 and the third lever 6.

For descriptive purposes, the two levers 4 and 6 are shown hinged to each other in a common fulcrum so as to form actual pincers. In this manner, the pincers element 2 can grip the bead 301 and apply thereto, by means of the elements 4 and 6, an appropriate clamping force.

The elements 4 and 6 are shaped so as to constitute the removal/mounting tool for the bead.

According to the schematic illustration of Figures 4-9, the operation of the pincers element can be described as follows.

The pincers 2 make contact with the bead 301 of the tire 300 after they have been positioned diametrically with respect to the rim 200 (Figure 4).

By means of the relative movement of the elements 4 and 6, the pincers 2 open in order to grip the bead 301 inside it (Figure 5).

After the bead 301 has been engaged by means of the element 4, the pincers close, moving toward it the element 6; at the same time, the pincers moves the bead 301 away from the rim 200 in a radial direction, toward the outside of the wheel, by means of the element 4 (Figure 6).

The rotation of the pincers 2 with respect to an external fulcrum moves the bead 301 from below to above (Y1) the edge 201 of the rim, making it advance also in a radial direction X1 (Figures 7 and 8), and in practice moving it away from the edge of the rim (Y1 > Y0).

The further advancement of the pincers in the direction X2 and Y2 positions the bead in the position suitable for the removal of the tire from the rim; the removal operation is then completed by means of the rotation of the rim-tire assembly (Figure 9).

By following the sequence in reverse, and reversing the movements, the pincers are used to mount the tire on the rim.

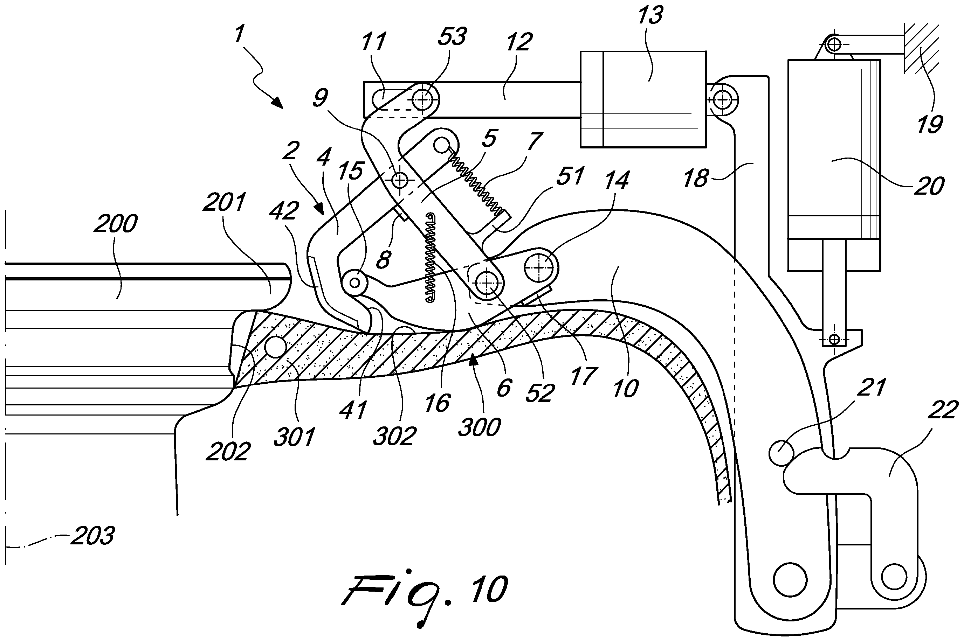

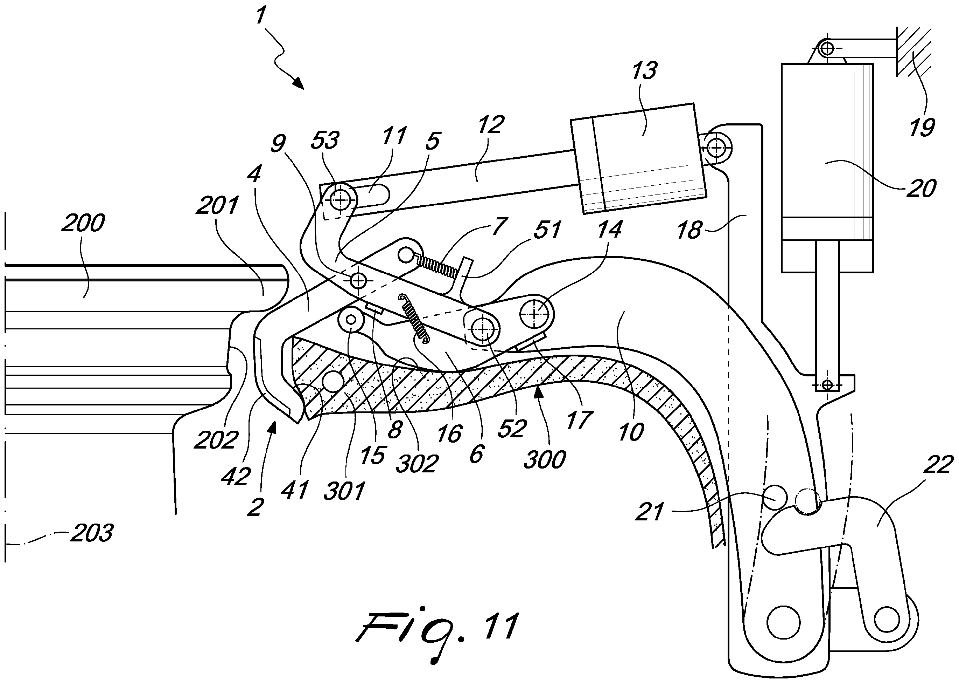

Figures 10 and 11 show schematically a preferred embodiment of the device according to the invention.

With reference to Figures 10 and 11, the device 1 includes a first lever 4 which constitutes a tool, a second lever 5, which acts as a linkage, and a third lever 6, which constitutes an arm that is pivoted to the tool 4 by means of the linkage 5.

The tool 4 has a hook-shaped end which has an internal part 41 and an external part 42 and is shaped so as to retain the bead 301 with its internal part 41 to then guide it in removal/mounting with its external part 42.

The external part 42 is protected by an element made of plastic or other similar material in order to avoid scratching the rim 200 if contact with it occurs.

On the opposite side, a first elastic element 7, constituted by a first helical spring, acts on the tool 4, which is hinged to the linkage 5 in the fulcrum 9 and is kept in a fixed closure position by means of a retention element 8.

At the other end, the spring 7 is coupled to an extension 51 of the linkage 5.

The linkage 5, which is hinged at the centerline to the tool 4, has an end 52 which is hinged to a support 10, or to the tool body 3, and the other end 53 which can move within a slot 11 provided in a stem 12 of a first actuator, for example a cylinder 13.

The arm 6 is hinged to the support 10 by means of a pivot 14 and can rotate about its own axis, which can coincide or not with the axis of the pivot that couples the linkage 5 to the support 10.

The arm 6 has, on the opposite side with respect to the pivot 14, a roller 15.

A second elastic element 16, constituted by a second helical spring, acts between the linkage 5 and the arm 6, keeping the latter in a fixed position by means of a retention element 17.

The support 10 is hinged to an auxiliary frame 18, which can slide on a guide that belongs to the main frame 19.

The first actuator 13 is hinged to the auxiliary frame 18.

A second actuator 20 is fixed to the main frame 19 and moves the auxiliary frame 18 in a direction that is parallel to the axis 203 of the rim 200 or of the wheel 300.

The operation of the device described above is as follows.

in the first step of the removal procedure, the pincers element 2 is arranged radially adjacent to the edge of the rim 201, either manually or with an automatic system, and then the second actuator 20 moves the pincers 2 though so that their end moves in a direction that is substantially parallel to the axis 203 of the rim 200 and the arm 6 makes contact with the flank 302 of the tire 300.

The joint action on the tool 4, applied by the second actuator 20 and by the arm 6, by means of the contact with the roller 15, causes the tool 4 to extend and engage the bead 301 of the tire 300, as shown schematically in Figure 11.

In the second step of the removal procedure, the first actuator 13 acts on the linkage 5 in order to retract and rotate the tool 4, which retains the bead 301 together with the arm 6; subsequently or simultaneously, the first actuator 13 actuates the rotation of the support 10 about the hinge with the auxiliary frame 18, until it engages a retention element 21 in a seat provided in a hook 22 that is hinged to the auxiliary frame 18.

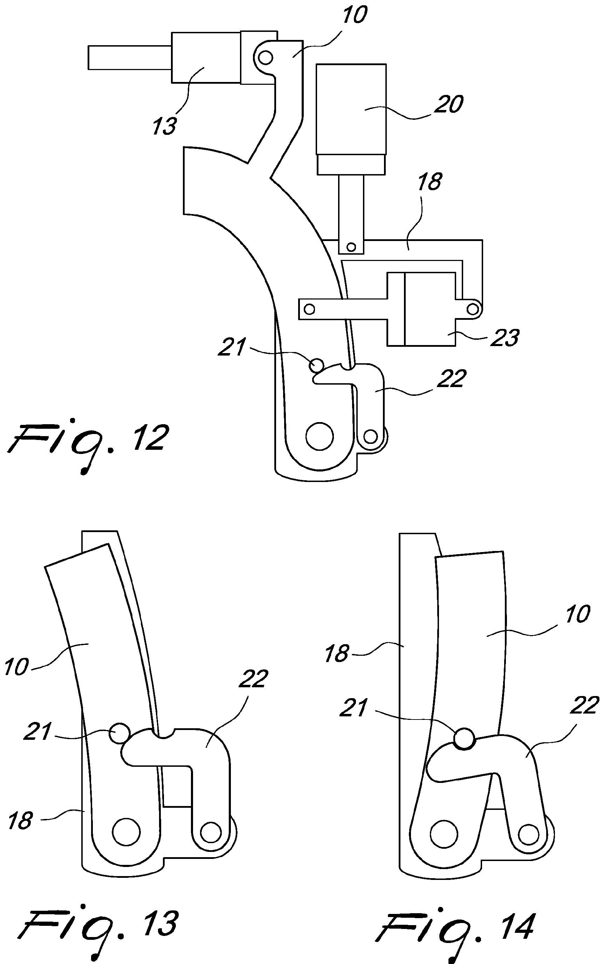

Figures 12-14 show another embodiment of the device, in which there is a third actuator, for example a cylinder 23, which connects the support 10 to the auxiliary frame 18. In this case, it is the third actuator 23 that actuates the rotation of the support 10 about the hinge with the auxiliary frame 18, until it engages the retention element 21 in the seat provided in the hook 22 that is hinged to the auxiliary frame 18.

At the end of this step, the bead 301 passes from below to above the edge 201 of the rim 200.

In a third step, the tool 4 arranges the bead 301 on the edge 201 of the rim 200 by means of the release of the linkage 5 on the part of the first actuator 13 and the simultaneous or non-simultaneous movement of the linkage 5 in a direction that is transverse to the axis 203 of the rim 200.

Finally, in a fourth step the procedure for the removal of the bead 301 is completed by turning the rim 200 about its own axis 203 and using the tool 4 as a guide for its complete exit.

It should be noted that the above cited operations of the device can be obtained both with the rim rotating with respect to the tool and with the rim stationary and the tool rotating about the rim. Furthermore, in both cases, there can also be multiple tools that act simultaneously or not on the tire.

In the process for mounting the tire 300 on the rim 200 the steps described above for the removal process are inverted in sequence before the completion operation by rotation.

In practice it has been found that the invention achieves the intended aim and objects, providing a device that allows to mount and/or remove a tire on/from the rim, avoiding damage to the rim itself.

The device according to the present invention is constituted by a pincers element 2 that is formed by a tool 4 that has an end 41, 42 that is shaped like a hook in order to grip the bead 301 of the tire.

The tool 4 is articulated to the arm 6, which has an end that is shaped like a presser and the other end that is hinged to the articulation system.

The two elements 4 and 6 can move with respect to each other and face each other so as to constitute the arms of a pincer.

The two elements 4 and 6, actuated by the actuators, apply a force to the object enclosed between them, i.e., the bead of the tire, moving it at the same time between two opposite positions with respect to the edge of the rim.

The two elements 4 and 6, of which one or both are fixed and/or extensible, are coupled and face each other so as to constitute pincers; the actuators, by means of the articulation system, move the two elements with respect to each other in order to grip/engage the bead of the tire, applying a clamping force thereto. Therefore, the two elements that constitute the pincers, again by means of the actuators and the articulation system, move the bead enclosed between them between two opposite positions with respect to the edge of the rim.

Devices that use two pincers elements adapted to retain the bead on both sides during removal and mounting are not known commercially.

The two elements that constitute the pincers of the device according to the present invention allow to move the bead in the correct manner by virtue of the locking action, following it around the rim.

As shown more clearly in Figures 6 and 7, the bead of the tire is rotated in the opposite direction with respect to traditional systems, which emulate the operation of the simple lever between the rim and the tire used in the past, and strip from the rim the bead, which naturally rotates in the opposite direction with respect to the edge of the rim.

The materials used, as well as the dimensions, may of course be any according to the requirements and the state of the art.

## Claims

1. A device for mounting and removing a tire on and from a rim, comprising a pincers element (2) which is pivoted in a tool body (3) and is configured to grip a tire bead (301); said pincers element (2) releasing said tire bead (301) on a rim edge (201) of said rim (200), in a removal operation, or in the inner seat of the rim (200), in a mounting operation; said device being **characterized in that** said pincers element (2) is configured to perform a preset rotation together with said tool body (3), moving away from said rim edge (201) with a motion over said rim edge (201) without making contact with said rim (200) at the end of said rotation; said pincers element (2) of the device comprising at least two levers, a first lever (4), which constitutes a tool, and a third lever (6), which constitutes an arm that is pivoted to said first lever (4); said levers (4, 6) applying a force to said tire bead (301), moving said tire bead (301) between two opposite positions with respect to said rim edge (201); said levers (4, 6) moving with respect to each other in order to grip/engage said tire bead (301), applying a clamping force thereto; said levers (4, 6) moving said tire bead (301) between two opposite positions with respect to said rim edge (201).

2. The device according to claim 1, **characterized in that** it comprises a second lever (5) which is a linkage (5); wherein said third lever (6) is pivoted to said tool (4) by means of said linkage (5); said tool (4) comprising a hook-shaped end which has an inner part (41) and an outer part (42) and is shaped so as to retain said bead (301) by means of its inner part (41) to then guide it with said outer part (42) during removal/mounting; on the opposite side of said tool (4), a first elastic element acts (7) on said tool (4) which is hinged to said linkage (5) in a fulcrum (9) and is held in a fixed closure position by means of a retention element (8); said first elastic element (7) being engaged, at its other end, with an extension of said linkage (5); said linkage (5) being hinged in the centerline to said tool (4) and having an end (52) that is hinged to a support (10) and another end (53) that is movable within a slot (11) formed in a stem (12) of a first actuator (13); said arm (6) being hinged to said support (10) by means of a pivot (14) and being able to rotate about its own axis, which can coincide or not with the axis of the pivot that couples said linkage (5) to said support (10); said arm (6) having a roller (15), on the opposite side with respect to said pivot (14); a second elastic element (16) acting between said linkage (5) and said arm (6), holding said arm (6) in a fixed position by means of a retention element (17); said support (10) being hinged to an auxiliary frame (18) which is able to slide along a guide that belongs to said main frame (19); said first actuator (13) being hinged to said auxiliary frame (18); a second actuator (20) being fixed to said main frame (19) and moving said auxiliary frame (18) along a direction that is parallel to the axis of the rim (200) or of the wheel.

3. The device according to claim 2, **characterized in that** said outer part (42) of said end of said tool (4) is protected by an element made of plastic, or other similar material, in order to avoid scratching said rim (200) if contact with it occurs.

4. The device according to claim 2, **characterized in that** in a first step of the removal procedure said pincers element (2) is arranged radially adjacent to said rim edge (201) and then said second actuator (20) moves said pincers so that their end moves along a substantially parallel direction with respect to the axis of the rim (200) and so that said arm makes contact with the side wall of said tire; the combined action on said tool (4), applied by said second actuator (20) and by said arm, by means of the contact with said roller, cause said tool (4) to extend and engage the bead (301) of the tire.

5. The device according to claim 4, **characterized in that** it comprises a third actuator (23) which connects said support (10) to said auxiliary frame (18); said third actuator (23) rotating said support (10) about the hinge with said auxiliary frame (18).

6. The device according to claim 4, **characterized in that** it comprises a locking element adapted to retain said tool body (3) to said auxiliary frame (18) at the end of its rotation.

## Patentansprüche

1. Vorrichtung zum Montieren und Demontieren eines Reifens auf und von einer Felge, die ein Zangenelement (2) aufweist, das in einem Werkzeugkörper (3) angelenkt und so konfiguriert ist, dass es einen Reifenwulst (301) ergreift; wobei das Zangenelement (2) den Reifenwulst (301) bei einem Demontagevorgang an einem Felgenrand (201) der Felge (200) oder bei einem Montagevorgang im inneren Sitz der Felge (200) freigibt; wobei die Vorrichtung **dadurch gekennzeichnet ist, dass** das Zangenelement (2) dazu ausgebildet ist, eine vorgegebene Drehung zusammen mit dem Werkzeugkörper (3) durchzuführen, wobei es sich von dem Felgenrand (201) mit einer Bewegung über den Felgenrand (201) wegbewegt, ohne die Felge (200) am Ende der Drehung zu berühren; wobei das Zangenelement (2) der Vorrichtung mindestens zwei Hebel umfasst, einen ersten Hebel (4), der ein Werkzeug darstellt, und einen dritten Hebel (6), der einen Arm darstellt, der an dem ersten Hebel (4) angelenkt ist; wobei die Hebel (4, 6) eine Kraft auf den Reifenwulst (301) ausüben, die den Reifenwulst (301) zwischen zwei entgegengesetzten Positionen in Bezug auf den Felgenrand (201) bewegt; wobei die Hebel (4, 6) sich relativ zueinander bewegen, um den Reifenwulst (301) zu greifen/zu beaufschlagen, indem sie eine Klemmkraft auf ihn ausüben; wobei die Hebel (4, 6) den Reifenwulst (301) zwischen zwei gegenüberliegenden Positionen in Bezug auf den Felgenrand (201) bewegen.

2. Vorrichtung nach Anspruch 1, **dadurch gekennzeichnet, dass** sie einen zweiten Hebel (5) aufweist, der ein Verbindungsteil (5) ist; wobei der dritte Hebel (6) mittels des Verbindungsteils (5) an dem Werkzeug (4) drehbar gelagert ist; wobei das Werkzeug (4) ein hakenförmiges Ende aufweist, das einen inneren Teil (41) und einen äußeren Teil (42) hat und so geformt ist, dass es den Wulst (301) mittels seines inneren Teils (41) festhält, um ihn dann mit dem äußeren Teil (42) während der Demontage/Montage zu führen; auf der gegenüberliegenden Seite des Werkzeugs (4) wirkt ein erstes elastisches Element (7) auf das Werkzeug (4), das in einem Drehpunkt (9) an dem Verbindungsteil (5) angelenkt ist und mittels eines Halteelements (8) in einer festen Verschlussposition gehalten wird; wobei das erste elastische Element (7) an seinem anderen Ende mit einer Verlängerung des Verbindungsteils (5) in Eingriff steht; wobei das Verbindungsteil (5) in der Mittellinie an dem Werkzeug (4) angelenkt ist und ein Ende (52), das an einer Halterung (10) angelenkt ist, und ein anderes Ende (53) aufweist, das in einem Schlitz (11) beweglich ist, der in einem Schaft (12) eines ersten Aktors (13) ausgebildet ist; wobei der Arm (6) mittels eines Drehgelenks (14) an der Halterung (10) angelenkt ist und sich um seine eigene Achse drehen kann, die mit der Achse des Drehgelenks, das das Verbindungsteil (5) mit der Halterung (10) verbindet, übereinstimmen kann oder nicht; wobei der Arm (6) eine Rolle (15) auf der dem Drehgelenk (14) gegenüberliegenden Seite aufweist; wobei ein zweites elastisches Element (16) zwischen dem Verbindungsteil (5) und dem Arm (6) wirkt und den Arm (6) mittels eines Halteelements (17) in einer festen Position hält; wobei die Halterung (10) an einem Hilfsrahmen (18) angelenkt ist, der entlang einer Führung gleiten kann, die zu dem Hauptrahmen (19) gehört; wobei der erste Aktor (13) an dem Hilfsrahmen (18) angelenkt ist; wobei ein zweiter Aktor (20) an dem Hauptrahmen (19) befestigt ist und den Hilfsrahmen (18) entlang einer Richtung bewegt, die parallel zu der Achse der Felge (200) oder des Rades ist.

3. Vorrichtung nach Anspruch 2, **dadurch gekennzeichnet, dass** der äußere Teil (42) des Endes des Werkzeugs (4) durch ein Element aus Kunststoff oder einem anderen ähnlichen Material geschützt ist, um ein Zerkratzen der Felge (200) zu vermeiden, wenn es zu einem Kontakt mit ihr kommt.

4. Vorrichtung nach Anspruch 2, **dadurch gekennzeichnet, dass** in einem ersten Schritt des Demontagevorgangs das Zangenelement (2) radial neben dem Felgenrand (201) angeordnet ist und dann der zweite Aktor (20) die Zange so bewegt, dass sich ihr Ende entlang einer im Wesentlichen parallelen Richtung in Bezug auf die Achse der Felge (200) bewegt und dass der Arm mit der Seitenwand des Reifens in Kontakt kommt; die kombinierte Wirkung auf das Werkzeug (4), die von dem zweiten Aktor (20) und von dem Arm durch den Kontakt mit der Rolle ausgeübt wird, bewirkt, dass das Werkzeug (4) ausfährt und mit dem Wulst (301) des Reifens in Eingriff kommt.

5. Vorrichtung nach Anspruch 4, **dadurch gekennzeichnet, dass** sie einen dritten Aktor (23) aufweist, der die Halterung (10) mit dem Hilfsrahmen (18) verbindet; wobei der dritte Aktor (23) die Halterung (10) um das Gelenk mit dem Hilfsrahmen (18) dreht.

6. Vorrichtung nach Anspruch 4, **dadurch gekennzeichnet, dass** sie ein Verriegelungselement aufweist, das dazu ausgebildet ist, den Werkzeugkörper (3) am Ende seiner Drehung an dem Hilfsrahmen (18) zu halten.

## Revendications

1. - Dispositif pour monter un pneu sur une jante et le démonter de celle-ci, comprenant un élément pince (2) qui est articulé à pivotement à un corps d'outil (3) et est configuré pour saisir un talon (301) ; ledit élément pince (2) libérant ledit talon (301) sur un bord de jante (201) de ladite jante (200), lors d'une opération de démontage, ou dans le siège intérieur de la jante (200), lors d'une opération de montage ; ledit dispositif étant **caractérisé par le fait que** ledit élément pince (2) est configuré pour effectuer une rotation prédéfinie avec ledit corps d'outil (3), en s'éloignant dudit bord de jante (201) avec un mouvement au-dessus dudit bord de jante (201) sans entrer en contact avec ladite jante (200) à la fin de ladite rotation ; ledit élément pince (2) du dispositif comprenant au moins deux leviers, un premier levier (4), qui constitue un outil, et un troisième levier (6), qui constitue un bras qui est articulé à pivotement audit premier levier (4) ; lesdits leviers (4, 6) appliquant une force sur ledit talon (301), déplaçant ledit talon (301) entre deux positions opposées par rapport audit bord de jante (201) ; lesdits leviers (4, 6) se déplaçant l'un par rapport à l'autre de façon à saisir/engager ledit talon (301), appliquant une force de serrage sur celui-ci ; lesdits leviers (4, 6) déplaçant ledit talon (301) entre deux positions opposées par rapport audit bord de jante (201).

2. - Dispositif selon la revendication 1, **caractérisé par le fait qu'**il comprend un deuxième levier (5) qui est une biellette (5) ; ledit troisième levier (6) étant articulé à pivotement audit outil (4) au moyen de ladite biellette (5) ; ledit outil (4) comprenant une extrémité en forme de crochet qui a une partie intérieure (41) et une partie extérieure (42) et est conformé de façon à retenir ledit talon (301) au moyen de sa partie intérieure (41) pour ensuite le guider avec ladite partie extérieure (42) lors du démontage/montage ; sur le côté opposé dudit outil (4), un premier élément élastique (7) agit sur ledit outil (4) qui est articulé à ladite biellette (5) en un point d'appui (9) et est maintenu dans une position de fermeture fixe au moyen d'un élément de retenue (8) ; ledit premier élément élastique (7) étant engagé, à son autre extrémité, avec une extension de ladite biellette (5) ; ladite biellette (5) étant articulée dans l'axe longitudinal à l'outil (4) et ayant une extrémité (52) qui est articulée à un support (10) et une autre extrémité (53) qui est mobile à l'intérieur d'une fente (11) formée dans une tige (12) d'un premier actionneur (13) ; ledit bras (6) étant articulé audit support (10) au moyen d'un pivot (14) et étant apte à tourner autour de son propre axe, lequel peut coïncider ou non avec l'axe du pivot qui couple ladite biellette (5) audit support (10) ; ledit bras (6) ayant un galet (15), sur le côté opposé par rapport audit pivot (14) ; un second élément élastique (16) agissant entre ladite biellette (5) et ledit bras (6), maintenant ledit bras (6) dans une position fixe au moyen d'un élément de retenue (17) ; ledit support (10) étant articulé à un cadre auxiliaire (18) qui est apte à coulisser le long d'un guide qui appartient audit cadre principal (19) ; ledit premier actionneur (13) étant articulé audit cadre auxiliaire (18) ; un deuxième actionneur (20) étant fixé audit cadre principal (19) et déplaçant ledit cadre auxiliaire (18) selon une direction qui est parallèle à l'axe de la jante (200) ou de la roue.

3. - Dispositif selon la revendication 2, **caractérisé par le fait que** ladite partie extérieure (42) de ladite extrémité dudit outil (4) est protégée par un élément fait de matière plastique, ou d'un autre matériau analogue, afin d'éviter de rayer ladite jante (200) en cas de contact avec celle-ci.

4. - Dispositif selon la revendication 2, **caractérisé par le fait que**, dans une première étape de la procédure de démontage, ledit élément pince (2) est disposé de manière radialement adjacente audit bord de jante (201), puis ledit deuxième actionneur (20) déplace ladite pince de telle sorte que son extrémité se déplace selon une direction sensiblement parallèle par rapport à l'axe de la jante (200) et que ledit bras entre en contact avec la paroi latérale dudit pneu ; l'action combinée sur ledit outil (4), appliquée par ledit deuxième actionneur (20) et par ledit bras, au moyen du contact avec ledit galet, amène ledit outil (4) à s'étendre et engager le talon (301) du pneu.

5. - Dispositif selon la revendication 4, **caractérisé par le fait qu'**il comprend un troisième actionneur (23) qui relie ledit support (10) audit cadre auxiliaire (18) ; ledit troisième actionneur (23) faisant tourner ledit support (10) autour de l'articulation avec ledit cadre auxiliaire (18).

6. - Dispositif selon la revendication 4, **caractérisé par le fait qu'**il comprend un élément de verrouillage apte à retenir ledit corps d'outil (3) audit cadre auxiliaire (18) à la fin de sa rotation.
